# EUROPEAN PATENT SPECIFICATION

(11) **EP 2 593 251 B1**
(45) Date of publication and mention of the grant of the patent: **07.10.2015**
(21) Application number: 11741105.8
(22) Date of filing: 15.07.2011
(51) Int. Cl.: B22C 1/22, B22C 9/12, C08L 63/00

(54) **FREE RADICAL INITIATOR COMPOSITIONS CONTAINING T-BUTYL HYDROPEROXIDE AND THEIR USE**
RADIKALLIEFERNDE INITIATORZUSAMMENSETZUNGEN MIT T-BUTYL-HYDROPEROXID UND IHRE VERWENDUNG
COMPOSITIONS D'AMORCEURS RADICALAIRES CONTENANT UN HYDROPEROXYDE DE T-BUTYLE ET LEUR UTILISATION

(30) Priority: 16.07.2010 US 837716
(43) Date of publication of application: 22.05.2013
(73) Proprietor: Ask Chemicals L. P., Wilmington, DE 19801 (US)
(72) Inventor: SHRIVER, H. Randall, Columbus Ohio 43235 (US); WOODSON, Wayne D., Georgetown IL 61846 (US)
(74) Representative: Müller Schupfner & Partner Patent- und Rechtsanwaltspartnerschaft mbB
(86) International application number: PCT/EP2011/003547
(87) International publication number: WO 2012/007175

(56) References cited:
- WO-A2-2005/011897
- WO-A2-2009/130335
- US-A- 4 518 723
- US-A- 4 526 219
- US-B2- 7 723 401

## Description

The present invention relates to a epoxy composition comprising an epoxy resin and a hydroperoxide composition comprising a t-butyl hydroperoxide solution, a foundry binder comprising the hydroperoxide composition, a foundry shape comprising the foundry binder, a process for preparing the foundry shape, a process for casting a metal article, and a metal casting prepared by the process.

### Background

A cold-box foundry process widely used for making foundry shapes (typically cores and molds) involves curing an epoxy-acrylate binder in the presence of sulfur dioxide (SO₂) and a free radical initiator. One of the well-known epoxy-acrylate binders used in this process is sold by ASK Chemicals under the trade name of ISOSET™ binder.

When this process was developed around 1982, foundries and binder product developers quickly discovered that cumene hydroperoxide was the best available commercial free radical initiator for the process for many reasons. cumene hydroperoxide has only a minor odor and its toxicity is low. Additionally, cumene hydroperoxide is stable enough to be shipped in truckload quantities, especially when it is blended with the epoxy resin. Furthermore, foundry shapes prepared with cumene hydroperoxide are adequate and they can be prepared with foundry mixes consisting of an aggregate and the uncured binder that have been sitting for up to a month. This reduces wasted sand and binder and results in cost saving and reduced environmental impact.

Because of these factors, foundries and binder product developers have shown no interest in using other free radical initiators in the ISOSET process, and there were no known free radical initiators that offered the advantages of cumene hydroperoxide, certainly none that were known that offered improvements when they were compared to cumene hydroperoxide.

Although t-butyl hydroperoxide was known when the ISOSET binder was developed, it has not been used as free radical initiator for the ISOSET binder. There are several reasons for this. It was commercially only available in two forms: (a) as a 70% solution in water and (b) as a solution in butanol. Although the water solution was stable enough to be shipped in bulk, it was incompatible with the epoxy resin in the binder system and foundry shapes made with solution of t-butyl hydroperoxide in water had poor tensile strengths. The butanol solution inhibited the cure of the epoxy system, the odor was oppressive in mixing, and the solution was not sufficiently stable to be shipped in bulk.

### Summary

The invention is defined in the claims and relates to a free radical initiator composition comprising (a) an epoxy resin; and (b) a hydroperoxide composition comprising a t-butyl hydroperoxide solution that contains no more than 7 weight percent water. It also relates to a process for using the free radical initiator composition to prepare foundry shapes, the foundry shapes prepared by the process, a process for preparing cast metal articles, and the cast metal articles prepared by the process.

One of the reasons the free radical initiator compositions are so useful is because the foundry shapes prepared by the process have greater immediate tensile strengths than foundry shapes prepared when cumene hydroperoxide is used as the free radical initiator. Thus, the foundry shapes can be removed from the mold without breaking sooner than if cumene hydroperoxide is used as the curing agent. This is particularly important in view of current technology where robots are used to remove the foundry shape from the mold. The ever increasing degree of automation in high productivity manufacturing environments results in more and more machines ("robots") manipulating cores in the process beginning with removal of cores from the die or mold, i.e., core box,, to automated assembly of core and mold packages to final placement of such packages on the pouring line where the castings are made by pouring liquid metal into and around the assembled packages.

Another advantage of using the free radical initiator compositions is that when used alone or in combination with cumene hydroperoxide, it is possible to use a more dilute stream of sulfur dioxide in an inert carrier gas such as nitrogen to cure the shaped foundry mix, which results in reduced operating costs and environmental impact. Typically, when cumene hydroperoxide is used as the free radical initiator, sulfur dioxide is applied at a concentration of 35-100% based on the volume of the inert carrier gas. In contrast to this, when the free radical initiator composition containing t-butyl hydroperoxide solution as defined herein is used, it is possible to use sulfur dioxide in lower concentrations, in particular as low as 25% based on the volume of the inert carrier gas without adversely effecting the immediate tensile strengths of the foundry shapes prepared, and even as low as 5% sulfur dioxide based on the volume of the inert carrier gas.

### Detailed Description

Epoxy resins used in the subject binders are well known in the art. Typically the epoxy resin will have an epoxide functionality (epoxide groups per molecule) equal to or greater than 1.9, typically from 2 to 4.0, and preferably from about 2.0 to about 3.7. Examples of epoxy resins include (1) diglycidyl ethers of bisphenol A, B, F, G and H, (2) aliphatic , aliphatic-aromatic, cycloaliphatic and halogen-substituted aliphatic , aliphatic-aromatic, cycloaliphatic epoxides and diglycidyl ethers, (3) epoxy novolacs, which are glycidyl ethers of phenol-aldehyde novolac resins, and (4) mixtures thereof.

Epoxy resins (1) are made by reacting epichlorohydrin with the bisphenol compound in the presence of an alkaline catalyst. By controlling the operating conditions and varying the ratio of epichlorohydrin to bisphenol compound, products of different molecular weight and structure can be made. Epoxy resins of the type described above based on various bisphenols are available from a wide variety of commercial sources.

Examples of epoxy resins (2) include glycidyl ethers of aliphatic and unsaturated polyols such as 3,4-epoxy cyclohexyl methyl-3,4-epoxy cyclohexane carboxylate, bis(3,4-epoxy cyclohexyl methyl)adipate, 1,2-epoxy-4-vinyl cyclohexane, 4-chloro-1,2-epoxy butane, 5-bromo-1,2-epoxy pentane, 6-chloro-1,3-epoxy hexane and the like.

Examples of epoxy novolacs (3) include epoxidized cresol and phenol novolac resins, which are produced by reacting a novolac resin (usually formed by the reaction of orthocresol or phenol and formaldehyde) with epichlorohydrin, 4-chloro-1,2-epoxybutane, 5-bromo-1,2-epoxy pentane, 6-chloro-1,3-epoxy hexane and the like. Particularly preferred are epoxy novolacs having an average equivalent weight per epoxy group of 165 to 200.

The acrylate is a reactive acrylic monomer, oligomer, polymer, or mixture thereof and contains ethylenically unsaturated bonds. Examples of such materials include a variety of monofunctional, difunctional, trifunctional, tetrafunctional and penta-functional monomeric acrylates and methacrylates. A representative listing of these monomers includes alkyl acrylates, acrylated epoxy resins, cyanoalkyl acrylates, alkyl methacrylates and cyanoalkyl methacrylates.

Other acrylates, which can be used, include trimethylolpropane triacrylate, pentaerythritol tetraacrylate, methacrylic acid and 2-ethylhexyl methacrylate. Typical reactive unsaturated acrylic polymers, which may also be used include epoxy acrylate reaction products, polyester/urethane/acrylate reaction products, acrylated urethane oligomers, polyether acrylates, polyester acrylates, and acrylated epoxy resins.

The free radical initiator composition comprises t-butyl hydroperoxide containing no more than 7 weight percent water. The free radical initiator composition contains other hydroperoxides, preferably cumene hydroperoxide. The free radical initiator composition is used in amount effective to initiate the free radical cure of the binder. Typically, the amount of free radical initiator composition used in the binder is from 15 parts by weight to 25 parts by weight based upon 100 parts of the total binder. If cumene hydroperoxide is used as a mixture with the t-butyl hydroperoxide, the weight ratio may cover a wide range, but typically the weight range of cumene hydroperoxide to t-butyl hydroperoxide is from 20:1 to 1:20, more typically from 1:5 to 5:1.

The t-butyl hydroperoxide used in the free radical initiator composition can be prepared by reacting t-butyl alcohol and sulfuric acid in the presence of hydrogen peroxide. Alternatively, the t-butyl hydroperoxide composition can be prepared by separating water from a commercially available solution of t-butyl hydroperoxide in water.

The curing agent used in connection with the free radical initiator composition is sulfur dioxide. Typically, the curing agent is used at 35-100% based on the volume of the inert carrier gas when cumene hydroperoxide is used as the free radical initiator. However, as was previously mentioned, one of the advantages of using a free radical initiator composition containing t-butyl hydroperoxide composition is that the sulfur dioxide used as the curing agent can be reduced further by dilution with an inert carrier gas such as nitrogen. Consequently, sulfur dioxide can be used at levels as low as 25% based on the volume of the inert carrier gas, and even as low as 5% based on the volume of the inert carrier gas.

Although the binder components can be added to the foundry aggregate separately, it is preferable to package the epoxy resin and free radical initiator as a Part I and add to the foundry aggregate first. Then the ethylenically unsaturated material, as the Part II, either alone or along with some of the epoxy resin, is added to the foundry aggregate.

Reactive diluents, such as mono- and bifunctional epoxy compounds, are not required in the binder composition, however, they may be used. Examples of reactive diluents include 2-butynediol diglycidyl ether, butanediol diglycidyl ether, cresyl glycidyl ether and butyl glycidyl ether.

Optionally, a solvent or solvents may be added to reduce system viscosity or impart other properties to the binder system such as humidity resistance. Typical solvents used are generally polar solvents, such as liquid dialkyl esters, e.g. dialkyl phthalates of the type disclosed in U.S. Patent 3,905,934, and other dialkyl esters such as dimethyl glutarate, dimethyl succinate, dimethyl adipate, diisobutyl glutarate, diisobutyl succinate, diisobutyl adipate and mixtures thereof. Esters of fatty acids derived from natural oils, particularly rapeseed methyl ester and butyl tallate, are also useful solvents. Suitable aromatic solvents are benzene, toluene, xylene, ethylbenzene, alkylated biphenyls and naphthalenes, and mixtures thereof. Preferred aromatic solvents are mixed solvents that have an aromatic content of at least 90%. Suitable aliphatic solvents include kerosene, tetradecene, and mineral spirits.

If a solvent is used, sufficient solvent should be used so that the resulting viscosity of the epoxy resin component is less than 1,000 centipoise and preferably less than 400 centipoise. Generally, however, the total amount of solvent is used in an amount of 0 to 25 weight percent based upon the total weight of the epoxy resin contained in the binder.

The binder may also contain a silane coupling agent which is also well known in the foundry art. The silane is preferably added to the binder in amounts of 0.01 to 2 weight percent, preferably 0.1 to 0.5 weight percent based on the weight of the binder, and depending on special performance requirements for the binder can be as high as 6% based on the weight of the binder, as demonstrated in U.S. Patent 7,723,401.

Phenolic resins may also be used in the foundry binder. Examples include any phenolic resin, which is soluble in the epoxy resin and/or acrylate, including metal ion and base catalyzed phenolic resole and novolac resins as well as acid catalyzed condensates from phenol and aldehyde compounds. However, if phenolic resole resins are used in the binder, typically used are phenolic resole resins known as benzylic ether phenolic resole resins, including alkoxy-modified benzylic ether phenolic resole resins. Benzylic ether phenolic resole resins, or alkoxylated versions thereof, are well known in the art, and are specifically described in U.S. Patents 3,485,797 and 4,546,124. These resins contain a preponderance of bridges joining the phenolic nuclei of the polymer, which are ortho-ortho benzylic ether bridges, and are prepared by reacting an aldehyde with a phenol compound in a molar ratio of aldehyde to phenol of at least 1:1 in the presence of a divalent metal catalyst, preferably comprising a divalent metal ion such as zinc, lead, manganese, copper, tin, magnesium, cobalt, calcium, and barium.

It will be apparent to those skilled in the art that other additives such as silicones, release agents, defoamers, wetting agents, etc. can be added to the aggregate, or foundry mix. The particular additives chosen will depend upon the specific purposes of the formulator.

Various types of aggregate and amounts of binder are used to prepare foundry mixes by methods well known in the art. Ordinary shapes, shapes for precision casting and refractory shapes can be prepared by using the binder systems and proper aggregate. The amount of binder and the type of aggregate used are known to those skilled in the art. The preferred aggregate employed for preparing foundry mixes is sand wherein at least about 70 weight percent, and preferably at least about 85 weight percent, of the sand is silica. Other suitable aggregate materials for producing foundry shapes include zircon, olivine, chromite sands, and the like, as well as man-made aggregates including aluminosilicate beads and hollow microspheres and ceramic beads.

In ordinary sand casting foundry applications, the amount of binder is generally no greater than about 10% by weight and frequently within the range of about 0.5% to about 7% by weight based upon the weight of the aggregate. Most often, the binder content for ordinary sand foundry shapes ranges from about 0.6% to about 5% by weight based upon the weight of the aggregate.

The foundry mix is molded into the desired shape by ramming, blowing, or other known foundry core and mold making methods. The shape confined foundry mix is subsequently exposed to effective catalytic amounts of sulfur dioxide vapor, which results in almost instantaneous cure of the binder yielding the desired shaped article. The exposure time of the sand mix to the gas is typically from 0.5 to 10 seconds. Optionally, a blend of nitrogen, as a carrier gas, and sulfur dioxide containing from 35 percent by volume or more of sulfur dioxide may be used, as described in U.S. Patents 4,526,219 and 4,518,723.

The core and/or mold may be incorporated into a mold assembly. When making castings, typically individual parts or the complete assembly is coated with a solvent or water-based refractory coating and in case of the latter passed through a conventional or microwave oven to remove the water from the coating. Molten metal is poured into and around the mold assembly while in the liquid state where it cools and solidifies to form a metal article. After cooling and solidification, the metal article is removed from the mold assembly and, if sand cores were used to create cavities and passages in the casting, the sand is shaken out of the metal article, followed by cleaning and machining if necessary. Metal articles can be made from ferrous and non-ferrous metals.

The following abbreviations are used in the examples.

| | |
|---|---|
| Bis-A Epoxy | bisphenol-A epoxy resin, 1.9 functionality |
| Bis-F epoxy | bisphenol-F epoxy resin, 2.0 functionality |
| BOB | based on binder |
| CHP | cumene hydroperoxide |
| EPN | epoxy novolac resin, 3.6 functionality |
| FRI | free radical initiator |
| HDODA | 1,6-hexanediol diacrylate |
| KER | kerosene, an aliphatic solvent |
| pbw | parts by weight |
| pbv | parts by volume |
| TMPTA | trimethylolpropane triacrylate |
| TBH | t-butyl hydroperoxide having a water content of less than 7 weight percent |
| RH | relative humidity |
| SCA | silane coupling agent |

### Examples

Example 1 (Preparation of t-butyl alcohol composition having no more than 7 weight percent water based upon the weight of the composition) To 100 pbw t-butyl alcohol and 19 pbw sulfuric acid (93%) were added over two hours with stirring 170 pbw of 35% hydrogen peroxide. The temperature was kept at 38 °C. Then the mix was heated to 60 °C and held at this temperature for one hour. At this point, the active oxygen was 14.3%. ½ of the lower phase was drained and 20 pbw 35% hydrogen peroxide were added to the upper phase. The mixture was heated to 60 °C and kept at that temperature for an additional 2 hours at which time the active oxygen was 14.8%. 80 pbw of the upper phase was blended with 20 pbw dioctyl adipate. The water phase separated and was drained. The organic phase was dried with sodium sulfate. The water content of the organic hydroperoxide composition was 6.5% and the active oxygen was 12.2%.

### Example 2 (Preparation of t-butyl alcohol composition having no more than 7 weight percent water based upon the weight of the composition)

In this example, water was separated from a commercially available t-butyl hydroperoxide solution containing 70% water (Trigonox A-W70 from AKZO Nobel) to prepare TBH having less than 7 weight percent water. The separation was carried out by mixing 25 pbw of dioctyl adipate with 100 pbw Trigonox A-W70 to phase out the water. The water phase was drained and the organic phase was dried with sodium sulfate. The resulting organic hydroperoxide had an active oxygen content of 12.04% and a water content of 6.5%.

Examples 3-7 (Examples that illustrate the use of the composition prepared in Example 1 or 2 to prepare test cores by the ISOSET® process where the binder contained an acrylate). In Comparison Examples A and B, and Examples 3-5, the binder used to make the test cores is the two-component binder described in Table 1. This binder is a commercially available ISOSET® binder sold by Ashland Inc. The binder components, except for the FRI, are set forth in Table 1. Example 3 differs from Examples 4-5 because the SO₂ was more diluted (15 pbv in nitrogen) than in Examples 4-5 (65 pbv in nitrogen).

In Comparison Example C and Examples 6-7 the binder was a one-part binder containing bis-A epoxy resin, 0.25 pbw silane, and the FRI. In these examples, the binder did not contain acrylate. In Comparison Examples A, B, and C, CHP was used as the FRI, whereas in Examples 3-7 TBH or a mixture of TBH and CHP was used as the FRI. The curing gas used, the amount, and the test results are set forth in Tables 2, 3, and 4.

**Table 1**

| (binder components except for the FRI) | |
|---|---|
| Part I of the binder comprises: | |
| Component | pbw (based upon 100 parts Part I) |
| Bis-A Epoxy | 65 |
| FRI | (see tables) |
| | |
| Part II of the binder comprises: | |

| Component | pbw (based upon 100 parts Part II) |
|---|---|
| Bis-A Epoxy | 53.7 |
| TMPTA | 45.7 |
| SCA | 0.6 |

The binder was applied at a level of 1 percent, based on the weight of the sand, at a Part I to Part II weight ratio of 60:40.

### Testing Protocol

The binder formulations were evaluated in the following examples for their tensile strengths. Comparison Example A and used CHP as the FRI while Examples 3 to 5 used either TBH or mixtures of TBH and CHP. The FRI and amounts are set forth in Tables 2 and 3.

In order to prepare the test core, the components of the binder were mixed for 2 minutes using a lab sand mixer. The binders were prepared and all cores were made on a Gaylord MTB-3 core-blowing unit. SO₂ cured tensile test specimens were gassed 1.5 seconds with a SO₂/nitrogen mixture delivered by an MT Systems SO₂/Nitrogen blending unit followed by a 10 second dry air purge. The binder level was 1.0% based on the weight of the sand.

### Measurement of Tensile Strength

How well a binder system bonds an aggregate (sand) together is typically evaluated by comparing tensile strength measurements of test cores made with the binder. Sufficient core strength is needed once the binder/sand mix is cured to prevent the core from distorting or cracking during assembly operations. Tensile strength measurements are taken immediately (20 seconds after core box opens) and after 5-minutes. Binder systems that retain higher tensile strengths over time can better retain their dimensional accuracy and have less core breakage problems. All tensile strength measurements were measured in accordance with standard ASTM tests.

The data in Tables 2, 3, and 4 demonstrate that the test cores made from binders that used TBH and mixtures of CHP and BTH as the FRI had higher immediate tensile strengths than the test cores made from binders that used CHP as the FRI. This result was apparent for test cores made from binders that did and did not contain an acrylate.

**Table 2**

| (Tensile strengths of test cores made when a blend of 15 pbv SO₂ in nitrogen was used as the curing agent) | | | | |
|---|---|---|---|---|
| Example | CHP(pbw BOB) | BTH (pbw BOB) | Immediate Tensile Strength (psi) | After 5 Minutes (psi) |
| A | 21 | 0 | 95 | 161 |
| 3 | 10.5 | 10.5 | 136 | 184 |

**Table 3**

| (Tensile strengths of test cores made when a blend of 65 pbv SO₂ in nitrogen was used as the curing agent) | | | | |
|---|---|---|---|---|
| Example | CHP(pbw BOB) | BTH (pbw BOB) | Immediate Tensile Strength (psi) | After 5 Minutes (psi) |
| B | 21 | 0 | 126 | 188 |
| 4 | 9 | 9 | 163 | 219 |
| 5 | 10.5 | 10.5 | 179 | 218 |

**Table 4**

| (Tensile strengths of test cores made from a binder that did not contain an acrylate where a blend of 65 pbv SO₂ in nitrogen was used as the curing agent) | | | | |
|---|---|---|---|---|
| Example | CHP (pbw BOB) | BTH (pbw BOB) | Immediate Tensile Strength (psi) | After 5 Minutes (psi) |
| C | 25 | 0 | 61 | 109 |
| 6 | 0 | 25 | 126 | 175 |
| 7 | 8.3 | 16.7 | 103 | 170 |

| | | | | |
|---|---|---|---|---|
| whereas 1psi=6.89 kPa | | | | |

Thus, the foundry shapes can be removed from the mold without breaking sooner than it is the case when cumene hydroperoxide is used as the curing agent. This is particularly important in view of current technology where robotic manipulators are used to remove the foundry shape from the die or mold. The test data also indicate that when used alone or in combination with cumene hydroperoxide, it is possible to use a more dilute sulfur dioxide stream, which results in reduced operating costs and environmental impact.

The foregoing description of the disclosure illustrates and describes the present disclosure. Additionally, the disclosure shows and describes only the preferred embodiments but, as mentioned above, it is to be understood that the disclosure is capable of use in various other combinations, modifications and environments and is capable of changes or modifications within the scope of the concept as expressed herein, commensurate with the above teachings and/or the skill or knowledge of the relevant art.

The embodiments described hereinabove are further intended to explain best modes known of practicing it and to enable others skilled in the art to utilize the disclosure in such, or other, embodiments and with the various modifications required by the particular applications or uses. Accordingly, the description is not intended to limit it to the form disclosed herein.

## Claims

1. An epoxy composition comprising:
(a) an epoxy resin; and
(b) a free radical initiator composition comprising a t-butyl hydroperoxide solution that contains no more than 7 weight percent water.

2. The epoxy composition of claim 1 wherein the free radical initiator composition further comprises cumene hydroperoxide.

3. The epoxy composition of claim 2 wherein the weight ratio of t-butyl hydroperoxide to cumene hydroperoxide is from 20 to 1 to 1 to 20.

4. The composition of any one of claims 1 to 3 wherein the amount of free radical initiator composition is from 10 to 30 parts by weight, preferably from 15 to 25 parts by weight, based upon 100 parts by weight of total composition.

5. A foundry binder comprising:
(a) 20 to 70 parts by weight of an epoxy resin;
(b) optionally 0 to 50 parts by weight of an acrylate;
(c) optionally 0 to 30 parts by weight of an alkyl ester of a fatty acid, wherein the alkyl group of the ester is an aliphatic hydrocarbon having up to 8 carbon atoms, preferably from 4 to 8 carbon atoms, and most preferably is butyl tallate; and
(d) a free radical initiator composition comprising a t-butyl hydroperoxide solution that contains no more than 7 weight percent water, wherein the amount of radical initiator composition is from 10 to 30 parts by weight based upon 100 parts by weight of the total binder.

6. The foundry binder of claim 5 wherein the binder, in particular the free radical initiator composition, further comprises cumene hydroperoxide.

7. The foundry binder of claim 6 wherein the weight ratio of t-butyl hydroperoxide to cumene hydroperoxide is from 20 to 1 to 1 to 20.

8. The foundry binder of any one of claims 5 to 7 wherein the amount of free radical initiator composition is from 15 to 25 parts by weight, based upon 100 parts by weight of the total binder.

9. The foundry binder of any one of claims 5 to 8 where (a), (b), (c), and (d) are separate components or mixed with another of said components, provided (b) is not mixed with (d), and where said parts by weight are based upon 100 parts of binder.

10. A foundry binder of any one of claims 5 to 9 comprising:
(b) 0,1 to 50 parts by weight of an acrylate and/or
(c) 0.1 to 30 parts by weight of an alkyl ester of a fatty acid, wherein the alkyl group of the ester is an aliphatic hydrocarbon having up to 8 carbon atoms, preferably from 4 to 8 carbon atoms, and most preferably is butyl tallate.

11. A process for preparing a foundry shape comprising:
(a) introducing a foundry mix into a pattern to form a foundry shape; and
(b) curing said shape with gaseous sulfur dioxide,
wherein said foundry mix comprises from 90 to 99 parts by weight of a foundry aggregate and the foundry binder of any one of claims 5 to 10.

12. The process of claim 11 wherein gaseous sulfur dioxide is diluted with nitrogen such that the concentration of sulfur dioxide is below 35 %, in particular below 35 to as little as 25%, based on the volume of the inert carrier gas.

13. The process of claim 11 wherein gaseous sulfur dioxide is diluted with nitrogen such that the concentration of sulfur dioxide is from 25 % to as little as 5% based on the volume of the inert carrier gas.

14. A foundry shape prepared in accordance with any one of claims 11 to 13.

15. A process of casting a metal article comprising:
(a) fabricating a foundry shape, in particular an uncoated foundry shape, in accordance with any one of claims 11 to 13;
(b) pouring said metal while in the liquid state into said foundry shape;
(c) allowing said metal to cool and solidify; and
(d) then separating the cast article from the foundry shape.

16. The process of claim 15 wherein the metal is aluminum.

17. A metal casting produced in accordance with claim 15 or 16.

18. Use of a t-butyl hydroperoxide solution as a free radical initiator for an epoxy resin, wherein the water present in the t-butyl hydroperoxide solution is 7 percent by weight or less.

## Patentansprüche

1. Epoxidharzzusammensetzung, umfassend:
(a) ein Epoxidharz und
(b) eine freie Radikale liefernde Initiatorzusammensetzung, umfassend eine tert-Butylhydroperoxidlösung, die nicht mehr als 7 Gew.-% Wasser enthält.

2. Epoxidharzzusammensetzung nach Anspruch 1, wobei die freie Radikale liefernde Initiatorzusammensetzung weiterhin Cumolhydroperoxid umfasst.

3. Epoxidharzzusammensetzung nach Anspruch 2, wobei das Gewichtsverhältnis von tert-Butylhydroperoxid zu Cumolhydroperoxid von 20:1 bis 1:20 beträgt.

4. Zusammensetzung nach einem der Ansprüche 1 bis 3, wobei die Menge an freie Radikale liefernde Initiatorzusammensetzung 10 bis 30 Gewichtsteile, bevorzugt 15 bis 25 Gewichtsteile, bezogen auf 100 Gewichtsteile der Gesamtzusammensetzung, beträgt.

5. Gießereibindemittel, umfassend:
(a) 20 bis 70 Gewichtsteile eines Epoxidharzes;
(b) gegebenenfalls 0 bis 50 Gewichtsteile eines Acrylats;
(c) gegebenenfalls 0 bis 30 Gewichtsteile eines Alkylesters einer Fettsäure, wobei der Alkylrest des Esters ein aliphatischer Kohlenwasserstoffrest mit bis zu 8 Kohlenstoffatomen, bevorzugt 4 bis 8 Kohlenstoffatomen, ist, und am meisten bevorzugt Butyltallat ist; und
(d) eine freie Radikale liefernde Initiatorzusammensetzung, umfassend eine tert-Butylhydroperoxidlösung, die nicht mehr als 7 Gew.-% Wasser enthält, wobei die Menge an radikalliefernder Initiatorzusammensetzung 10 bis 30 Gewichtsteile, bezogen auf 100 Gewichtsteile des gesamten Bindemittels, beträgt.

6. Gießereibindemittel nach Anspruch 5, wobei das Bindemittel, insbesondere die freie Radikale liefernde Initiatorzusammensetzung, weiterhin Cumolhydroperoxid umfasst.

7. Gießereibindemittel nach Anspruch 6, wobei das Gewichtsverhältnis von tert-Butylhydroperoxid zu Cumolhydroperoxid von 20:1 bis 1:20 beträgt.

8. Gießereibindemittel nach einem der Ansprüche 5 bis 7, wobei die Menge an freie Radikale liefernde Initiatorzusammensetzung 15 bis 25 Gewichtsteile, bezogen auf 100 Gewichtsteile des gesamten Bindemittels, beträgt.

9. Gießereibindemittel nach einem der Ansprüche 5 bis 8, wobei (a), (b), (c) und (d) getrennte Komponenten sind oder mit einer anderen der Komponenten gemischt sind, mit der Maßgabe, dass (b) nicht mit (d) gemischt ist, und wobei die Gewichtsteile auf 100 Teilen Bindemittel basieren.

10. Gießereibindemittel nach einem der Ansprüche 5 bis 9, umfassend:
(b) 0,1 bis 50 Gewichtsteile eines Acrylats und/oder
(c) 0,1 bis 30 Gewichtsteile eines Alkylesters einer Fettsäure, wobei der Alkylrest des Esters ein aliphatischer Kohlenwasserstoffrest mit bis zu 8 Kohlenstoffatomen, bevorzugt 4 bis 8 Kohlenstoffatomen, ist, und am meisten bevorzugt Butyltallat ist.

11. Verfahren zur Herstellung einer Gießform, umfassend:
(a) Einbringen eines Gießereigemischs in eine Form, um eine Gießform zu bilden; und
(b) Härten der Gießform mit gasförmigem Schwefeldioxid,
wobei das Gießereigemisch 90 bis 99 Gewichtsteile eines Gießereiaggregats und das Gießereibindemittel nach einem der Ansprüche 5 bis 10 umfasst.

12. Verfahren nach Anspruch 11, wobei gasförmiges Schwefeldioxid so mit Stickstoff verdünnt wird, dass die Konzentration an Schwefeldioxid unter 35 %, insbesondere unter 35 % bis zu 25 % herab, bezogen auf das Volumen des inerten Trägergases, beträgt.

13. Verfahren nach Anspruch 11, wobei gasförmiges Schwefeldioxid so mit Stickstoff verdünnt wird, dass die Konzentration an Schwefeldioxid von 25 % bis zu 5 % herab, bezogen auf das Volumen des inerten Trägergases, beträgt.

14. Gießform, hergestellt nach einem der Ansprüche 11 bis 13.

15. Verfahren zum Gießen eines Metallgegenstands, umfassend:
(a) Herstellen einer Gießform, insbesondere einer unbeschichteten Gießform, nach einem der Ansprüche 11 bis 13;
(b) Gießen des Metalls im flüssigen Zustand in die Gießform;
(c) Abkühlenlassen und Erstarrenlassen des Metalls und
(d) anschließendes Trennen des gegossenen Gegenstands von der Gießform.

16. Verfahren nach Anspruch 15, wobei das Metall Aluminium ist.

17. Metallgussteil, hergestellt nach Anspruch 15 oder 16.

18. Verwendung einer tert-Butylhydroperoxidlösung als freie Radikale liefernder Initiator für ein Epoxidharz umfassend, wobei in der tert-Butylhydroperoxidlösung 7 Gew.-% oder weniger Wasser enthalten ist.

## Revendications

1. Composition époxy comprenant :
(a) une résine époxy ; et
(b) une composition d'initiateur radicalaire comprenant une solution d'hydroperoxyde de t-butyle qui contient pas plus de 7 % en poids d'eau.

2. Composition époxy selon la revendication 1, dans laquelle la composition d'initiateur radicalaire comprend en outre de l'hydroperoxyde de cumène.

3. Composition époxy selon la revendication 2, dans laquelle le rapport en poids de l'hydroperoxyde de t-butyle à l'hydroperoxyde de cumène est de 20 à 1 à 1 à 20.

4. Composition selon l'une quelconque des revendications 1 à 3, dans laquelle la quantité de la composition d'initiateur radicalaire est de 10 à 30 parties en poids, de préférence de 15 à 25 parties en poids, par rapport à 100 parties en poids de la composition totale.

5. Liant de fonderie comprenant :
(a) de 20 à 70 parties en poids d'une résine époxy ;
(b) facultativement de 0 à 50 parties en poids d'un acrylate ;
(c) facultativement de 0 à 30 parties en poids d'un ester alkylique d'un acide gras, dans lequel le groupe alkyle de l'ester est un hydrocarbure aliphatique ayant jusqu'à 8 atomes de carbone, de préférence de 4 à 8 atomes de carbone, et de manière préférée entre toutes c'est le tallate de butyle ; et
(d) une composition d'initiateur radicalaire comprenant une solution d'hydroperoxyde de t-butyle qui contient pas plus de 7 % en poids d'eau, dans laquelle la quantité de la composition d'initiateur radicalaire est de 10 à 30 parties en poids par rapport à 100 parties en poids du liant total.

6. Liant de fonderie selon la revendication 5, dans lequel, en particulier, la composition d'initiateur radicalaire comprend en outre de l'hydroperoxyde de cumène.

7. Liant de fonderie selon la revendication 5, dans lequel le rapport en poids de l'hydroperoxyde de t-butyle à l'hydroperoxyde de cumène est de 20 à 1 à 1 à 20.

8. Liant de fonderie selon l'une quelconque des revendications 5 à 7, dans lequel la quantité de la composition d'initiateur radicalaire est de 15 à 25 parties en poids, par rapport à 100 parties en poids du liant total.

9. Liant de fonderie selon l'une quelconque des revendications 5 à 8, dans lequel (a), (b), (c) et (d) sont des composants séparés ou mélangés à un autre desdits composants, à condition que (b) ne soit pas mélangé avec (d), et dans lequel lesdites parties en poids sont basées sur 100 parties de liant.

10. Liant de fonderie selon l'une quelconque des revendications 5 à 9, comprenant :
(b) de 0,1 à 50 parties en poids d'un acrylate et/ou
(c) de 0,1 à 30 parties en poids d'un ester alkylique d'un acide gras, dans lequel le groupe alkyle de l'ester est un hydrocarbure aliphatique ayant jusqu'à 8 atomes de carbone, de préférence de 4 à 8 atomes de carbone, et de manière préférée entre toutes c'est le tallate de butyle.

11. Procédé de préparation d'une forme de fonderie consistant à :
(a) introduire un mélange de fonderie dans un motif pour former une forme de fonderie ; et
(b) durcir ladite forme avec du dioxyde de soufre gazeux,
dans lequel ledit mélange de fonderie comprend de 90 à 99 parties en poids d'un agrégat de fonderie et le liant de fonderie selon l'une quelconque des revendications 5 à 10.

12. Procédé selon la revendication 11, dans lequel le dioxyde de soufre gazeux est dilué avec de l'azote de sorte que la concentration en dioxyde de soufre est inférieure à 35 %, en particulier inférieure à 35 à aussi peu que 25 %, par rapport au volume du gaz vecteur inerte.

13. Procédé selon la revendication 11, dans lequel le dioxyde de soufre gazeux est dilué avec de l'azote de sorte que la concentration en dioxyde de soufre soit de 25 % à aussi peu que 5 %, par rapport au volume du gaz vecteur inerte.

14. Forme de fonderie préparée selon l'une quelconque des revendications 11 à 13.

15. Procédé de moulage d'un article métallique consistant à :
(a) fabriquer une forme de fonderie, en particulier une forme de fonderie non revêtue, selon l'une quelconque des revendications 11 à 13 ;
(b) verser ledit métal à l'état liquide dans ladite forme de fonderie ;
(c) permettre audit métal de refroidir et de solidifier ; et
(d) séparer ensuite l'article moulé de la forme de fonderie.

16. Procédé selon la revendication 15, dans lequel le métal est l'aluminium.

17. Moulage métallique produit selon la revendication 15 ou 16.

18. Utilisation d'une solution d'hydroperoxyde de t-butyle en tant qu'initiateur radicalaire pour une résine époxy, dans laquelle l'eau présente dans la solution d'hydroperoxyde de t-butyle est inférieure ou égale à 7 % en poids.
